# EUROPEAN PATENT APPLICATION

(11) **EP 4 645 274 A1**
(43) Date of publication of application: **05.11.2025**
(21) Application number: 23855861.3
(22) Date of filing: 26.12.2023
(51) Int. Cl.: G07D 7/00, G07D 7/12, G07D 7/20

(54) **METHODS IMPLEMENTED BY A COMPUTER FOR CHECKING THE EXISTENCE OF A VARIABLE DIFFRACTIVE OPTICAL ELEMENT POSITIONED ON A SURFACE OF AN OBJECT, AND RELATED COMPUTER PROGRAMS AND READING MEANS**

(30) Priority: 29.12.2022 PT 2022118443
(71) Applicant: INCM - Imprensa Nacional-Casa da Moeda, S.A., 1000-042 Lisboa (PT); Instituto De Sistemas E Robótica - Coimbra, 3030-290 Coimbra (PT)
(72) Inventor: ANTÓNIO RODRIGUES DE FIGUEIREDO FERREIRA PEREIRA, Luís, 3030-181 COIMBRA (PT); MIGUEL MENDONÇA DA SILVA GONÇALVES, Nuno, 3030-290 COIMBRA (PT); DE SENA BAPTISTA PIMENTEL MARCOS, João, 3000-187 COIMBRA (PT)
(74) Representative: Monteiro Alves, Inês
(86) International application number: PCT/PT2023/050046
(87) International publication number: WO 2024/144409

(57) **Abstract**

The invention relates to computer implemented methods for verifying the existence of a diffractive optically variable image device (DOVID) on a surface of a security element by means of the processing of images captured of said security element. The security element can include a bidimensional graphical code, for example, a QR code (QR) or a logotype (LOG). The methods of the invention preferably comprise conversion steps from the RGB model (from the English *Red, Green* and *Blue*) of the images processed to the HSV color mode (from the English *Hue, Saturation* and *Value*), there being calculated structural similitude indexes and color transitions indexes for the classification of a DOVID or a non-DOVID.

The methods of the present invention simultaneously present great robustness relative to the geometry and nature of the surfaces under analysis, provide reliable results in a wide range of uncontrolled lighting conditions, are simple to use and generate results with repeatability.

## Description

### TECHNICAL DOMAIN

The present invention is related to the verification of variable diffractive optical elements used in security elements placed on an object, for example security stamps for the protection of goods and documents.

### PRIOR ART

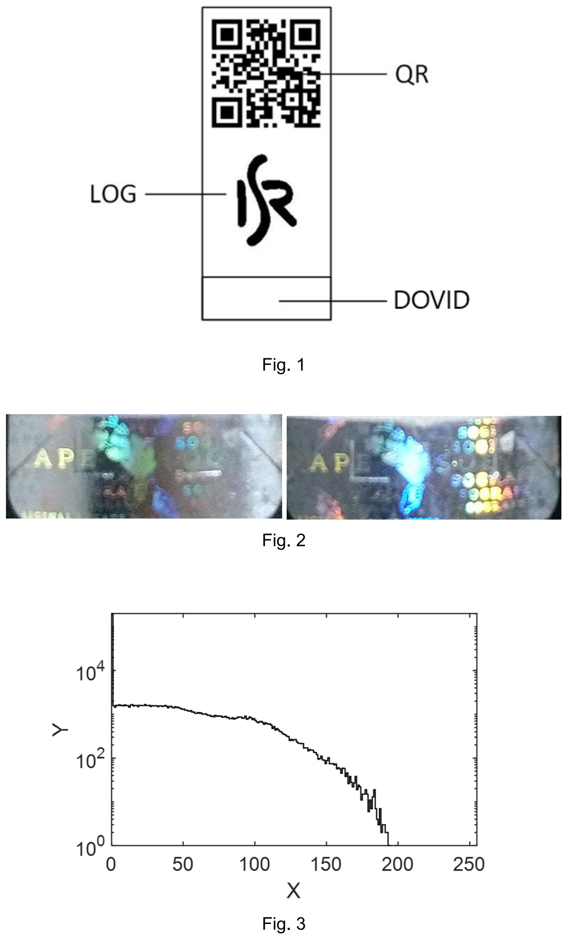

Several methods of verification of the existence in a determined region of interest of diffractive optically variable elements are known, hereinafter known as DOVID. The DOVID, also commonly designated as holograms, are frequently placed in security elements using security stamps used in the protection of products and documents. Figure 1 shows an example of a test security stamp comprising a QR code, a logotype or mark, and a DOVID.

European patent application EP3910548 A1 discloses a method for verifying the existence of a DOVID in a determined region of interest, using a smartphone. This method requires the smartphone to move relatively to the variable diffractive optical element.

In North American patent application US 2014/0055824 A1 there is disclosed a method wherein the verification of the existence of a DOVID is made using two images of the region of interest, captured in quick succession. One of the images is captured in ambient lighting and the other image in a different lighting condition, for example with the *flash* incorporated in the *smartphone* on. This method does not require movement of the *smartphone* relatively to the diffractive optically variable element.

The verification of the variable optical nature of the elements of the security stamps described in document US 2014/0055824 A1 is based on the analysis of the histogram of the difference between the grayscale representation of the two images captured in succession. The decision to classify an element as being optically variable or not is made through a threshold value in the axis that represents the levels of gray of this histogram. That is, if there are levels of gray above a certain threshold value, the region of interest is classified as optically variable.

### PROBLEMS OF THE PRIOR ART

The method disclosed in European patent application EP3910548 A1 requires the smartphone to move relative to the DOVID. This movement must be carried out in accordance with guidelines existing on the preview of the smartphone and which were programmed for this purpose. The process of image capture of this method presents less convenience in use than the methods wherein there is no need to move the camera relatively to a certain region of optical interest (ROI), nor the imposition of following a predefined course. Additionally, in this method there is the need to make the correction of the geometric deformation of the images resulting from the movement of the camera relative to the ROI. This process is computationally expensive and can lead to loss of robustness of the process of classification due to the existence of imperfections in the correction of the geometric deformation. Additionally, this method requires the light of the smartphone to be connected during capture of the several images, translating into higher power consumption relative to the classification methods wherein the light source is only connected during the time interval necessary to obtain only one image. This fact is particularly important when the classification method is implemented in a portable system with finite autonomy.

The verification method described in patent application US 2014/0055824 A1 can lose robustness when the copy of the DOVID is made from a material which reflection has a strong specular component, particularly when placed over curved surfaces or containing reliefs. In figure 2 on the left there is shown a digital image of a DOVID placed over a curved surface. The image was obtained with ambient lighting. In figure 2 on the right there is observed a digital image of the same element with the *flash* built into the *connected* smartphone. The time interval between the capture of the two images is less than 200 milliseconds. The images shown in figure 2 show clear and dark areas in both lighting conditions (figure 2 on the right and figure 2 on the left). On the other hand, the geometry of the visible elements on the two images presents differences in both lighting conditions. It is further observed that some of the elements have approximately the same geometry in the two lighting conditions, but they exhibit different colors.

Figure 3 shows the respective histogram of the difference in grayscale representation of the two images of figure 2, obtained according to the method described in patent application US 2014/0055824 A1. In this histogram the abscissa axis (X) represents the difference in grayscale representation of the two images of figure 2 and the ordinate axis (Y) represents the distribution frequency of these same values. The maximum value in axis X is 196.

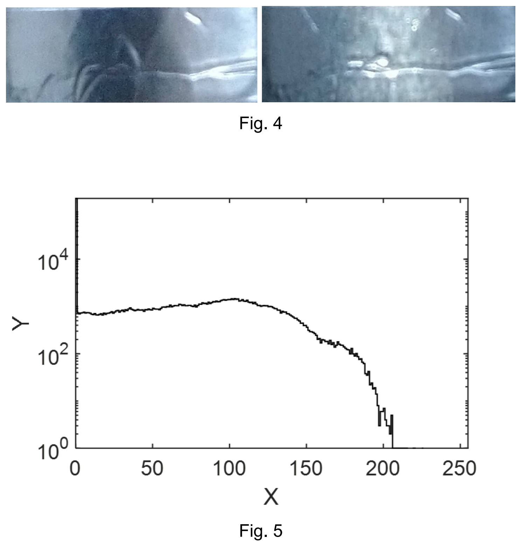

Figure 4 shows images captured in the same conditions mentioned for figure 2, whereby the DOVID was replaced by a metallic strip with approximately the same dimensions. The image in figure 4 on the left was obtained with ambient lighting and the image in figure 4 on the right was obtained with the *flash* built into the *connected* smartphone. The time interval between the capture of the two images is less than 200 milliseconds. Figure 5 shows the respective histogram of the difference in grayscale representation of the images, which maximum value on the X axis is 237, a higher value than that obtained in the histogram of figure 3 (196). In these conditions, depending on the threshold value chosen, the method proposed in US 2014/0055824 A1 would erroneously classify the DOVID or the piece of metallic strip.

In short, if the ROI is constituted by a material having a strong specular reflection component or placed on a curved surface, the analysis of the histograms proposed in US 2014/0055824 A1 may not constitute a robust estimator, for example, of the nature of the ROI.

Further, in situations wherein the nature of a certain ROI is predominantly manifested by a change in color of the variable diffractive optically elements that comprise same, the method disclosed in US 2014/0055824 A1 can also lose robustness, since it is not based on color variation analysis.

Thus, it is desired to develop a method of verification of the optical nature of a certain ROI, which simultaneously presents a great robustness in relation to the geometry and nature of the surfaces under analysis, provides reliable results in a wide range of uncontrolled lighting conditions, with a simple use procedure and which generates results with high repeatability.

### SOLUTION OF THE PROBLEM

The present invention aims at mitigating the limitations of the existing methods of verifying whether a certain region of optical interest (ROI) includes or not a diffractive optically variable element (DOVID).

To evaluate the nature of a certain ROI there are obtained two images in succession containing this same ROI, but in different lighting conditions.

For example, in one practical embodiment wherein the acquisition of the images is made with the camera of a *"smartphone"* with a built-in *"flash"* one of the images is captured in the lighting conditions existing at the place and the other image is captured adding to the existing lighting conditions at the place the light originated from the built-in *flash* in the camera.

In case, during the capture of the images, the occurrence of relative movement is possible between the image capture device and the ROI, the time interval between the capture of the images must be the smallest possible so that there is a good overlap of the two images.

The ROIs are cut out from the captured images and, after processing, the verification of the presence of a DOVID in the ROI is made using the result of the calculation of at least one index, namely the color transitions index (CTI) and the structural similitude index (SSIM). The SSIM is correlated to the level of similitude of the two images and the CTI is correlated with the density of local color variations which occur between the two images captured of the ROI.

In the preferred embodiments of the present invention, the computer implemented method for verifying the existence of a diffractive optically variable element of a certain ROI is based on machine learning techniques (from the English *machine learning*). In this method the nature of a certain ROI is assessed through a classifier fed by a pair of values (CTI, SSIM) obtained during a verification. The classification model is created a priori and is an integral part of the classification chain implemented in the method according to the invention. To create the model of the classifier a significant set of data is used, namely pairs (CTI,SSIM) obtained in representative conditions of the problem to be solved and followed by training, verification and classifier test using machine learning techniques.

Thus, the methods of the invention comprise conversion steps from the RGB model (from the English *Red, Green and Blue* - RGB) of the images processed to the HSV color mode (from the English *Hue, Saturation and Value*), there being calculated structural similitude indexes and color transitions indexes for the classification of a digital image as a diffractive optically variable element or a non-diffractive optically variable element.

Another embodiment of the present method is carried out only with the calculated value of the structural similitude index (SSIM) and a suitable threshold value.

Alternatively, the present method is executed only with the calculated value of the color transitions index (CTI) and a suitable threshold value.

The choice between the combination of methods must be made considering, among others, the computational system requirements, lighting conditions and characteristics of the ROI which is intended to classify.

### ADVANTAGEOUS EFFECTS OF THE INVENTION

The method of the present invention simultaneously presents great robustness relative to the geometry and nature of the surfaces under analysis, provides reliable results in a wide range of uncontrolled lighting conditions, is simple to use and generates results with high repeatability.

The present invention tries to increase the security level by means of a method which can be implemented in systems which are available to the consumer, such as is the case of a *smartphone.* The proposed method, when implemented in a portable device simplifies the fraud detection process, without the need for using specialized equipment, specific lighting conditions or specific movements of the image acquisition device or the object under analysis.

The use of machine learning techniques in one of the embodiments of the method, according to the invention, causes it to achieve greater robustness in a much wider range of operating conditions, such as lighting conditions, position, lighting intensity, materials which constitute the ROI and untrained users. Additionally, the method allows a dedicated training for specific use conditions, such as for example the intensity and spectral composition of the lighting or the position of the image acquisition device relative to the ROI being verified.

Additionally, there can be used in specific cases, simplified forms of the method wherein only the value of the structural similitude or the value of the color transitions index are used. Other forms of use of the method are generally computationally lighter, do not require a pre-trained classifier and can, depending on the operating conditions, present satisfactory robustness levels.

### BRIEF DESCRIPTION OF THE FIGURES

With the purpose of providing an understanding of the principles according to the embodiments of the present invention, reference will be made to the embodiments illustrated in the figures and to the terminology used to describe them. In any case, it should be understood that there is no intention of limiting the scope of the present invention to the contents of the figures. Any subsequent alterations or modifications of the inventive characteristics illustrated herein, as well as any additional applications of the principles and embodiments of the invention illustrated, which would normally occur to a person skilled in the art in possession of this specification, are considered as being within the scope of the invention claimed.
Figure 1 - illustrates a security stamp created for test purposes which includes a QR code (QR), a logotype (LOG) and a diffractive optically variable element (DOVID);
Figure 2 - illustrates digital images of a diffractive optically variable element captured by a digital camera of a *smartphone* under different lighting conditions. Left: *flash* off. Right: *flash* on;
Figure 3 - illustrates a histogram of the difference in grayscale representation (8 bits) of digital images of figure 2, obtained according to a method of the state of the art. The values of the histogram according to X axis are found in the interval [0, 196];
Figure 4 - illustrates digital images of a piece of the metallic strip placed on the same surface and with the same dimensions as the DOVID that is shown in figure 2. The lighting conditions during capture of the images were similar to the conditions of Figure 2. Left: *flash* off. Right: *flash* on;
Figure 5 - illustrates a histogram of the difference in grayscale representation (8 bits) of digital images of figure 4, obtained according to a method of the state of the art. The values of the histogram according to axis X are found in the interval [0, 237];
Figure 6 - illustrates a block diagram of the cutting process of the regions of optical interest and of the reference region of optical interest of the digital images captured. On the left there is shown the diagram corresponding to the first digital image captured; on the right there is shown the diagram corresponding to the second digital image captured;

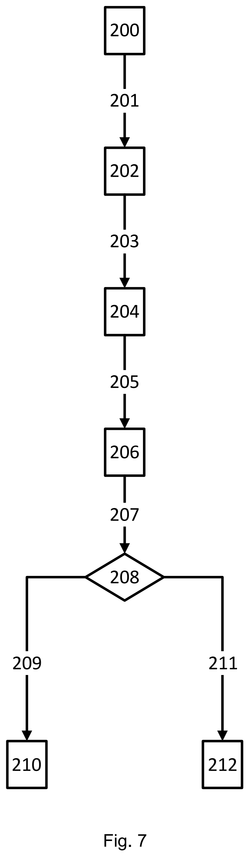

Figure 7 - illustrates a block diagram of the process of verification of the color variation in model CIELAB of the image obtained in controllable lighting conditions, for example with lighting originating from a *flash*;

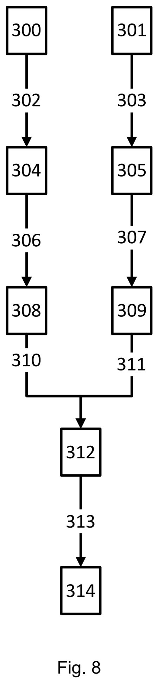

Figure 8 - illustrates a block diagram of the method of classification of the nature of a region of optical interest, according to the invention, that is, for verifying whether or not it is a variable diffractive element. This method is based on the calculation of the color transitions index (CTI). The nature of the region of optical interest is classified comparing the value obtained of the CTI with a convenient threshold value;

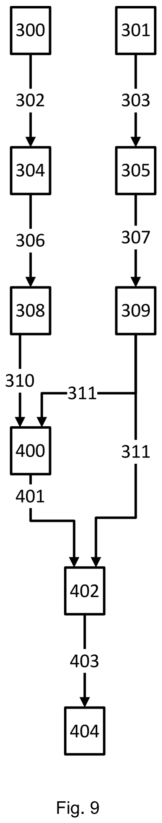

Figure 9 - illustrates a block diagram of the method of classification of the nature of region of optical interest, according to the invention, that is, for verifying whether or not it is a diffractive variable element. This method is based on the calculation of the structural similitude index (SSIM). The nature of the region of optical interest is classified comparing the value obtained of the SSIM with a convenient threshold value;

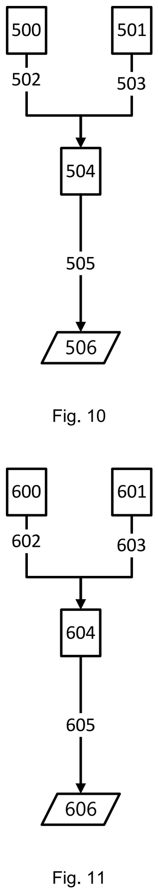

Figure 10 - illustrates a block diagram of a step of the training, test, and validation procedure for a classifier model (504) based on machine learning. In the block diagram the input points (500) and (501) are respectively the CTI and the SSIM values calculated according to the block diagrams which are shown in figures 6, 8 and 9;
Figure 11 - illustrates a block diagram of the method according to the invention, that is, for verifying whether or not it is a diffractive variable element. In this embodiment there is a classification step using the classification model created according to the steps (500) to (504);
Figure 12 - illustrates images of a test seal obtained in different lighting conditions. The variation of the colors and of the structure of the diffractive optically variable element are observed (see description in figure 1);
Figure 13- illustrates images of two test seals whereby the images a) and b) are of test seals with a DOVID and images c) and d) are of a test seal wherein the DOVID was replaced by a printed copy. The lighting conditions in a) and b) are different as well as the lighting conditions of c) and d). It is observed that the DOVID image varies from a) to b) while the image of the printed copy is approximately invariable between c) and d);
Figure 14 - illustrates images of a test seal captured with lighting with different spectral compositions. The image on the left was captured in lighting conditions with a blue component relatively more intense than that existing during the capture of the image on the right;
Figure 15 - illustrates a QR code. The area delimited by the square with thicker contours can be used as reference optical interest area, for the calculation of the necessary reference white for the procedure of white balance in the images captured in the context of the methods of verification of the existence or not of a DOVID in a certain region of interest.

### DESCRIPTION OF THE EMBODIMENTS

First embodiment: based on the calculation of a structural similitude index (SSIM) and on the use of an HSV color model.

The present invention is related in a first aspect, to a computer implemented method for verifying the existence of a diffractive optically variable element (DOVID) arranged on the surface of an object by means of processing of images captured of a security element by an image acquisition device comprising the following steps:
a) Capture, executed by the image acquisition device, for example a digital camera with built-in *flash,* of at least two images including a region of optical interest arranged in the security element, wherein
   a first digital image of the security element (102) is captured under a first lighting condition (100); and
   a second digital image of a security element (103) is captured under a second lighting condition (101), wherein the capture of the second digital image of the security element (103) is temporally out of phase relative to the capture of the first digital image of a security element (102);
b) Cutout of a region of optical interest of the first digital image (112), executed by a computer processing unit, obtaining a region of optical interest cut out from the first digital image of a security element (114); and cutout of region of optical interest of the second digital image (113), obtaining a region of optical interest cut out from the second digital image of a security element (115);
c) Obtaining, carried out by a computer processing unit, a first reference white for the region of optical interest cut out from the first digital image of a security element and a second reference white for the region of optical interest cut out from the second digital image of a security element;
d) Resizing the region of optical interest of the first image (300) and resizing the region of optical interest (301) of the second image, executed by a computer processing unit, respectively of the region of optical interest cut out from the first digital image of a security element (114) and of the region of optical interest cut out from the second digital image of a security element (115), obtaining a region of optical interest of the first digital image of a security element (302) and a second region of optical interest resized from the second digital image of a security element(303);
e) Conversion, executed by a computer processing unit, from the RGB color model to the HSV color model of the resized region of optical interest of the first digital image of a security element (302); and conversion, executed by a computer processing unit, from the RGB color model to the HSV color model of the second resized region of optical interest of the second digital image of a security element (303), obtaining, respectively a region of optical interest of the first digital image of a security element in the HSV color model (310) and a region of optical interest of the second digital image of a security element in the HSV color model (311);
f) Balance (400) of the histogram of channel V of the region of optical interest of the first digital image of a security element in color model HSV (310) relative to the histogram of channel V of the region of optical interest of the second digital image of a security element in HSV color model (311), obtaining a channel V of a balanced image of the resized region of optical interest of the digital image of a security element obtained in a first lighting condition (401);
g) Calculation (402) of a structural similitude index (SSIM), executed by a computer processing unit, based on channel V of a balanced image of the resized region of optical interest of the digital image of a security element obtained in a first lighting condition (401) and on channel V of the region of optical interest of the second digital image of a security element in HSV color model (311);
h) First classification (404) of a digital image as a diffractive optically variable element or non-diffractive optically variable element, executed by a computer processing unit, based on the relation between the value of the structural similitude index (SSIM) calculated in step g) and a reference threshold value.

### Second embodiment: based on the calculation of a color transitions index (CTI) and on the use of an HSV color model

The present invention is related in a second aspect, to a computer implemented method for verifying the existence of a diffractive optically variable element arranged on the surface of an object by means of processing of images captured of a security element by an image acquisition device comprising the following steps:
a) Capture, executed by the image acquisition device, for example a digital camera with built-in *flash,* of at least two images including a region of optical interest arranged in the security element, wherein
   a first digital image of the security element (102) is captured under a first lighting condition (100); and
   a second digital image of a security element (103) is captured under a second lighting condition (101), wherein the capture of the second digital image of the security element (103) is temporally out of phase relative to the capture of the first digital image of a security element (102);
b) Cutout of the two regions of optical interest of the first digital image (112), executed by a computer processing unit, obtaining a region of optical interest cut out from the first digital image of a security element (114) and a reference region of optical interest cut out from the first digital image (116) ; and cut out from two regions of optical interest of the second digital image (113), obtaining a region of optical interest cut out from the second digital image of a security element (115) and a reference region of optical interest cut out from the second digital image (117);
c) Obtaining, carried out by a computer processing unit, a reference white for the region of optical interest cut out from the first digital image of a security element and a reference white for the region of optical interest cut out from the second digital image of a security element;
d) Resizing the region of optical interest of the first image (300) and resizing the region of optical interest (301) of the second image, executed by a computer processing unit, respectively of the region of optical interest cut out from the first digital image of a security element (114) and of the region of optical interest cut out from the second digital image of a security element (115), obtaining a resized region of optical interest of the first digital image of a security element (302) and a second resized region of optical interest of the second digital image of a security element (303);
e) White balance of the image of the resized region of optical interest of the digital image of a security element obtained in a first lighting condition (304), executed by a computer processing unit, of the resized region of optical interest, of the first digital image of a security element (302) relative to the reference white of the first region of optical interest cut out from the first digital image of a security element, and white balance of the image of the resized region of optical interest of the digital image of the security element obtained in a second lighting condition (305), executed by a computer processing unit of the second resized region of optical interest of the second digital image of a security element (303), relative to the reference white for the second region of optical interest cut out from the first digital image of a security element, obtaining respectively a balanced region of optical interest of a first digital image of a security element (306) and a balanced region of optical interest of the second digital image of a security element (307);
f) Conversion (308), executed by a computer processing unit, from the RGB color model to the HSV color model of the balanced region of optical interest of the first digital image of a security element (306) and conversion (309), executed by a computer processing unit from the RGB color model to the HSV color model of the balanced region of optical interest of the second digital image of a security element (307), obtaining, respectively a region of optical interest of the first digital image of a security element in the HSV color model (310) and a region of optical interest of the second digital image of a security element in the HSV color model (311);
g) Calculation (312) of a color transitions index (CTI), executed by a computer processing unit, based on the count of the color transitions of channel H of the HSV color model for the two digital images obtained in step f), relative to a reference threshold value (CTI threshold);
h) Second classification (314) of a digital image as a diffractive optically variable element or non-diffractive optically variable element, executed by a computer processing unit, based on the relation between the value of the color transitions index (CTI) calculated in step g) and a reference threshold value.

### Third embodiment: based on the use of a CIELAB color model

The present invention is related in a third aspect, to a computer implemented method for verifying the compatibility of the optical characteristics of a certain region of interest with those of a diffractive optically variable element arranged on the surface of an object by means of processing of images captured of a security element by an image acquisition device comprising the following steps:
a) Capture, executed by the image acquisition device, for example a digital camera with built-in *flash,* of at least one image including a region of optical interest arranged on the security element, wherein the first digital image of the security element (102) is captured under a first lighting condition (100), controlled by the image acquisition device, for example, with the help of the built-in *flash*;
b) Cutout of a region of optical interest of the first digital image (112), executed by a computer processing unit, obtaining a region of optical interest cut out from the digital image of a security element (114) and a reference region of optical interest cut out from the digital image (116);
c) Obtaining, carried out by a computer processing unit, a reference white for the region of optical interest cut out from the digital image of a security element;
d) Resizing the image of the region of optical interest to be classified (200), executed by a computer processing unit, of the region of optical interest cut out from the first digital image of a security element (114), obtaining a resized region of optical interest of the digital image of a security element (302);
e) White balance of the image of the region to be classified (202), executed by a computer processing unit, of the resized region of optical interest of the digital image of a security element (201), relative to the reference white for the region of optical interest cut out from the digital image of a security element, obtaining a balanced region of optical interest of the digital image of a security element (203);
f) Conversion (204), executed by a computer processing unit, from the RGB color model to the CIELAB color model of the balanced region of optical interest of the digital image of a security element (203), obtaining a balanced image in the CIELAB space of the image of the balanced and resized region to be classified (205);
g) Calculation (206), executed by a computer processing unit, of the variances of channels a* and b* of the representation in the CIELAB color model of the balanced image in the CIELAB space of the image of the resized and balanced region to be classified (205);
h) Decision (208) and classification (210) of a digital image as compatible or not with the optical characteristics of a diffractive optically variable element executed by a computer processing unit, wherein the digital image is classified as incompatible with the diffractive optically variable element under study, if the variances (207) of the channels a* and b* of the representation in the CIELAB color model of the balanced image in the CIELAB space of the resized and balanced image of the region to be classified (205) are respectively less than a threshold CIELAB value for the channel a* (CIELAB threshold a*) and a threshold CIELAB value for channel b* (CIELAB threshold b*).

### Fourth embodiment: based on the calculation of a structural similitude index (SSIM) and of a color transitions model (CTI)

The present invention is related in a fourth aspect, to a computer implemented method for verifying the existence of a diffractive optically variable element arranged on the surface of an object by means of processing of images captured of a security element by an image acquisition device comprising the following steps:
a) Capture, executed by the image acquisition device, for example a digital camera with built-in *flash,* of at least two images including a region of optical interest arranged in the security element, wherein
   a first digital image of the security element (102) is captured under a first lighting condition (100); and
   a second digital image of a security element (103) is captured under a second lighting condition (101), wherein the capture of the second digital image of the security element (103) is temporally out of phase relative to the capture of the first digital image of a security element (102);
b) Cutout of the two regions of optical interest of the first digital image (112), executed by a computer processing unit, obtaining a region of optical interest cutout of the first digital image (114) and a reference region of optical interest cut out from the first digital image (116); and cutout of the two regions of optical interest of the second digital image (113), obtaining a region of optical interest cutout of the second digital image of a security element (115) and a reference region of optical interest cutout of the second digital image (117);
c) Obtaining, carried out by a computer processing unit, a reference white for the region of optical interest cutout of the first digital image of a security element and of a reference white for the region of optical interest cutout of the second digital image of a security element;
d) Resizing the region of optical interest of the first image (300) and resizing the region of optical interest (301) of the second image, executed by a computer processing unit, respectively of the region of optical interest cut out from the first digital image of a security element (114) and of the region of optical interest cut out from the second digital image of a security element (115), obtaining a resized region of optical interest of the first digital image of a security element (302) and a second resized region of optical interest of the second digital image of a security element (303);
e) White balance of the image of the resized region of optical interest of the digital image of a security element obtained in a first lighting condition (304), executed by a computer processing unit, of the resized region of optical interest, of the first digital image of a security element (302) relative to the reference white of the first region of optical interest cut out from the first digital image of a security element, and white balance of the image of the resized region of optical interest of the digital image of the security element obtained in a second lighting condition (305), executed by a computer processing unit of the second resized region of optical interest of the second digital image of a security element (303), relative to the reference white for the second region of optical interest cut out from the first digital image of a security element, obtaining respectively a balanced region of optical interest of a first digital image of a security element (306) and a balanced region of optical interest of the second digital image of a security element (307);
f) Conversion (308), executed by a computer processing unit, from the RGB color model to the HSV color model of the balanced region of optical interest of the first digital image of a security element (306) and conversion (309), executed by a computer processing unit from the RGB color model to the HSV color model of the balanced region of optical interest of the second digital image of a security element (307), obtaining, respectively a region of optical interest of the first digital image of a security element in the HSV color model (310) and a region of optical interest of the second digital image of a security element in the HSV color model (311);
g) Balance (400) of the histogram of channel V of the region of optical interest of the first digital image of a security element in color model HSV (310) relative to the histogram of channel V of the region of optical interest of the second digital image of a security element in HSV color model (311), obtaining a channel V of a balanced image of the resized region of optical interest of the digital image of a security element obtained in a first lighting condition (401);
h) Calculation (402) of a structural similitude index (SSIM), executed by a computer processing unit, based on channel V of a balanced image of the resized region of optical interest of the digital image of a security element obtained in a first lighting condition (401) and on channel V of the region of optical interest of the second digital image of a security element in HSV color model (311);
i) Calculation (312) of a color transitions index (CTI), executed by a computer processing unit, based on the count of the color transitions of channel H of the HSV color model for the two digital images obtained in step f), relative to a reference threshold value (CTI threshold);
j) Classification (404) and classification (314) of a digital image as a diffractive optically variable element or a non-diffractive optically variable element, respectively executed by a computer processing unit, based on values of the structural similitude index (SSIM), calculated in step h) and on the color transitions index (CTI), calculated in step i); wherein the order of the steps h) and i) can be exchanged.

### Computer program and reading means by a computer apparatus related to the methods according to the present invention.

The present invention is related in a fifth aspect, to a computer program comprising instructions which, when the computer program is executed by a computer apparatus, make the computer apparatus execute the steps of any method defined in the first, second, third or fourth aspect of the invention;

The present invention is related, in a sixth aspect, to reading means by a computer apparatus, characterized by having the computer program, as defined in the second aspect of the invention, stored.

### Description of the preferred embodiments of the methods according to the invention

The variable diffractive optical element (DOVID) is built-in as a security element arranged on the surface of an object, to allow verifying the authenticity of the object, whereby the object is selected from the group consisting of a seal, a label, a tag, a stamp, a document, a bill, an identity card, a travel document, a degree, a certificate, a bank card, a banknote, or a financial security.

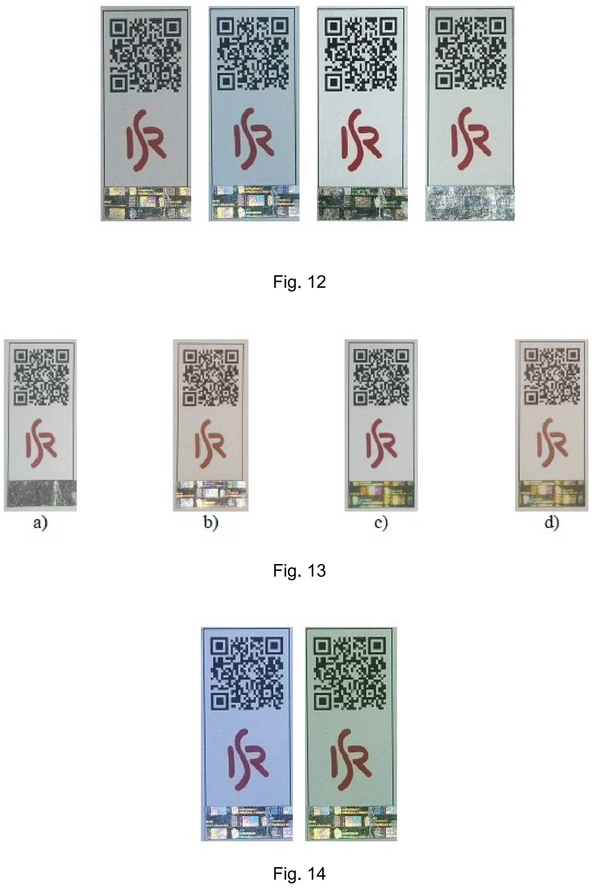

The variable diffractive optical element presents a variable visual appearance, particularly of color and structure, due to the lighting conditions existing at the place wherein it is observed and the position of the observer relative to the diffractive optically variable element itself. On the other hand, a non-diffractive falsification, for example a printed falsification of a diffractive optically variable element presents an invariable visual aspect in diffractive terms, essentially exhibiting effect of light reflection. Figure 12 shows digital images of adiffractive optically variable element under different lighting conditions. Figures 13a and 13b illustrate digital images of a diffractive optically variable element captured by a digital camera of a *smartphone* under different lighting conditions (*flash* on and off). Figures 13c and 13d show digital images of a printed copy of a diffractive optically variable element by means of an inkjet printer, whereby the images are captured by the digital camera of a *smartphone* under different lighting conditions (*flash* on and off). As can be seen in Figures 13a and 13b, the images of the diffractive optically variable element are different, while images of the printed copy of a diffractive optically variable element are practically indistinguishable, as visualized in figures 13c and 13d.

The image acquisition device comprises an optical reading means, for example a digital camera with built-in *flash* whereby it is possible to employ several types of computer apparatuses, such as, for example, the *smartphones* or *tablets* comprising digital cameras. Optionally, there can be used computers connected to image acquisition systems, for example microscopes or optical telescopes. Thus, it is an advantage of the present invention that the computer implemented method for verifying the existence of a diffractive optically variable element in a security element can be executed in versatile computer apparatuses, portable and accessible not only to forensic examination laboratories, but also to businessmen, consumers, or authorities.

In the preferred embodiments according to the invention, the method of verifying the existence or not of a DOVID in a determined ROI according to the present invention can be executed by means of a digital photographic camera with capacity of image transmission to a computer image processing unit. For example, a system which incorporates an image acquisition device and a computer processing unit arranged in modular form or in an integrated manner can comply these requirements. An example of said system is a *smartphone,* which incorporates all the functionalities of the image acquisition, controllable light source, communication, and transmission of required data.

In step a) of the capture, executed by the image acquisition device, for example a digital camera with built-in *flash,* there occurs the capture of at least two images including a region of optical interest (ROI) arranged on the security element, wherein the first digital image of the security element (102) is captured under a first lighting condition; and a second digital image of a security element (103) is captured under a second lighting condition, wherein the capture of the second digital image of a security element (103) is temporally out of phase relative to the capture of the first digital image of a security element (102).

In this manner, the images of the ROI are captured in succession and in at least two different lighting conditions.

Next, we shall illustrate an embodiment wherein only two images are captured whereby each one of them was obtained in different lighting conditions. On the other hand, other embodiments wherein a greater number of images and lighting conditions are used are comprised within the scope of the present invention.

Preferably, the image acquisition device incorporated into the portable computer apparatus executes the captures of the first digital image of the security element (102) and of the second digital image of a security element (103), whereby a light source is active for one of said images and inactive for the other one. Even more preferably, said light source is the *"flash"* source, which can be activated and is controllable by the image acquisition device, by means of the computer processing unit.

In the preferred embodiments, the digital camera has a pre-visualization system, wherein it is possible to create auxiliary guides for the setting of the captured images, which can be constituted by geometrical figures selected according to the geometry of the ROI under verification. As will be appreciated by a person skilled in the art, the position of the guides can be configured aiming at optimizing the conditions of capture of the image, which can be automated according to the definitions of the camera.

The auxiliary guides for capture of the images help the user to establish the suitable position in which the digital camera must be placed relative to the object, for example a security stamp. A suitable position allows minimizing the intensity of the specular reflections in images captured with *flash* and reducing the distortion in perspective of the images obtained.

The image capturing step can be manually initiated through loading a physical or digital knob or through an application according to the requirements established for the purpose, for example the detection of a certain element in the security stamp. The digital camera can be configured to work in automatic focus mode. For certain cases it will be necessary to define the region used by the camera to proceed with the focusing and the calculation of the suitable exposure parameters.

When the operator fits the security stamp under verification, according to the framing guides of image capture and the digital camera finishes focusing, the process of image capture can begin according to step a) of the method according to the invention.

When the image capturing is triggered, the control system of the digital camera initiates the following sequence of events: 1) the camera captures a first digital image of the security element (102) in the existing lighting conditions at the location, that is, without the use of an external light source; 2) the captured image is registered; 3) the (*flash*) light source is activated; 4) the camera captures a second digital image of a security element (103) in the existing lighting conditions at the location with the *flash* turned on; 5) the image captured is registered.

The order in which the images are obtained, with and without *flash* is immaterial and for this reason the sequence of events 3,4,5,1,2 is also valid, whereby in this case the first digital image of a security element (102) would be the image obtained with *flash* turned on and the second digital image of a security element (103) would be the image obtained with the *flash* turned off. Hereinafter, for the purposes of synthesis, only the sequence of events 1,2,3,4,5 will be considered.

In applications wherein it is foreseen that the position of the ROI relative to the digital camera is not fixed, the capture of the images must be done in a short period of time (< 1 second) for there to be a good overlay of the images captured.

The exposure parameters to be used must be suitable to the light conditions, the technical characteristics of the camera and the characteristics of the DOVID under verification.

In step b) of the methods of the present invention related to the cutout of the regions of interest, the ROI under verification are cut out from the first digital image of a security element (102) and of the second digital image of a security element (103) and hereinafter designated as region of optical interest cutout of the first digital image of a security element (114), reference region of optical interest cutout of the second digital image (115) and reference region of optical interest cutout of the second digital image (117). The cutout can be made through reference points existing in the element that contains the ROI or any other method capable of making a cutout of the ROI under verification.

Preferably, the dimensions of the region of optical interest cutout of the first digital image of a security element (114) and of the region of optical interest cutout of the second digital image of a security element (115) are normalized to the dimensions of the ROI cutout having smallest dimension.

Even more preferably, for the purposes of balance of colors of the images obtained a corresponding region is cut out from each of the images which contains an area from which the value of the reference white for each image can be calculated.

In the preferred embodiments, the method according to the invention includes an additional step of detecting a reference zone for the establishment of a coordinates system in each of the images which allows the definition of the geometry of the ROI in each of the images and the subsequent cutout. This additional step is executed between the previously referred steps a) and b) by a computer processing unit.

Preferably, the security element includes a bidimensional graphical code, for example, a QR Code or a logotype (LOG).

The reference zone is preferably a digital marker of one-dimensional digital marker matrix or a two-dimensional digital marker of a digital marker matrix. Even more preferably, the reference zone is a digital marker of two-dimensional digital marker such as for example, a QR Code. One example of a reference zone for a diffractive optically variable element in a security element arranged on the surface of an object is illustrated in Figure 1.

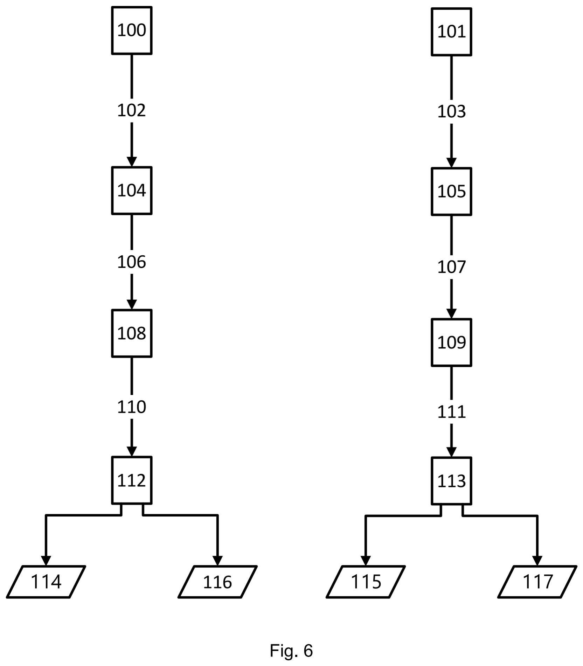

In the preferred embodiments, as illustrated in Figure 6, said digital matrix markers are processed in a step of detecting the position of the reference fiducial markers existing in the first digital image (104) and in a step of detecting the position of the reference fiducial markers in the second digital image (105), obtaining coordinates of the reference fiducial markers of the first digital image (106) and coordinates of the reference fiducial markers of the second digital image (107), which are submitted to the calculation steps (108, 109) of the coordinates of the two regions of optical interest of the first digital image, obtaining coordinates (110, 111) of the two regions of optical interest of the first digital image.

In the preferred embodiments of the invention, before the steps relative to the white balance, referring to the calculation of whites, the calculation of the value of the reference white is done, by a computer processing unit, for the resized region of optical interest of the first digital image of a security element obtained in a first lighting condition (302) and for the second resized region of optical interest of the second digital image of a security element obtained in a second lighting condition (303). Alternatively, the reference white can be calculated, before step d), relative to the resizing, for the region of optical interest cut out from the first digital image of a security element (114) and for the region of optical interest cutout of the second digital image of a security element (115). The reference white and each of said images is calculated through the area selected for the purpose during the cutting out process. For each of the images, the value of the corresponding white is given by the mean value of channel R, G and B of the reference zone of each of the images. In this way, the values of the reference whites are calculated from the reference region of optical interest cut out from the first digital image (116) and of the region of optical interest cut out from the second digital image (117). Thus, a reference white is obtained to balance the region of optical interest cut out from the first digital image of a security element (114) and a reference white for balancing the region of optical interest cut out from the second digital image of a security element (115).

In the steps of the methods of the present invention related to the resizing, the dimensions of the resized region of optical interest of the first digital image of a security element obtained in a first lighting condition (302) and of the resized region of optical interest of the second digital image of a security element obtained in a second lighting condition (303) are preferably reduced using a resizing function which includes anti-aliasing (from the English *anti-aliasing*). Alternatively, there can be used a resizing function and subsequently proceed to the anti-aliasing step. In this context, the expression "anti-aliasing" refers to smoothing of the contours of the elements of an image.

In the steps of the methods of the present invention related to the white balance, there is carried out the balance of colors of the resized region of optical interest of the first digital image of a security element obtained in a first lighting condition (302), relative to the reference white for the first region of optical interest cut out from the first digital image of a security element, and of the resized region of optical interest of the second digital image of a security element obtained in a second lighting condition (303), relative to the reference white for the second region of optical interest cut out from the first digital image of a security element, according to the respective reference white value, obtaining respectively a balanced region of optical interest of the first digital image of a security element (306) and a balanced region of optical interest of the second digital image of a security element (307).

When the spectral composition of the light incident over the ROI arranged on the security element is varied, the colors perceived will vary according to the incident light spectrum, as exemplified in Figure 14. In this context, if the light composition varies, for example turning more yellow or bluer, the image of a falsification on white paper is either yellow or blue. This effect does not happen in a pure diffractive optical element since the light emerges from the element through a diffraction process and not reflection.

In this way, step e) of white balance aims at guaranteeing that the representation of a given region in the two images has the same color, providing it is not a diffractive optically variable element.

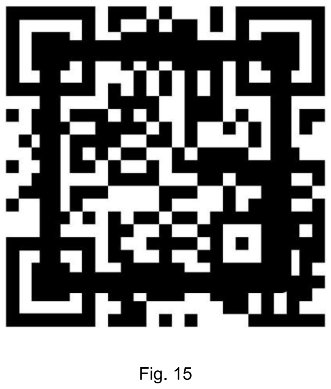

An example of a reference white common to both images is the use of an area of a two-dimensional matrix digital marker printed in black and white, as illustrated in Figure 15. In this case, the value of the reference white for each of the images, in the RGB color model, is given by the average of channels R, G and B calculated for the set of all pixels which compose the respective images.

In the preferred embodiments in a fourth aspect of the invention, there is executed an alternative step to identify the compatibility of the optical characteristics of a certain region of optical interest with those of a diffractive optically variable element arranged on the surface of an object. In this alternative, the color model of the balanced region of optical interest of a digital image of a security element (203) is converted, by a computer processing unit, from RGB to CIELAB, obtaining a balanced image in the CIELAB space of the resized and balanced image of the region to be classified (205); and there is carried out a calculation step (206), by a computer processing unit, of the variances of channels a* and b* of the representation in the CIELAB color model of the resized and balanced region to be classified; and there is carried out a decision step (208) and classification (210) of the digital image as compatible or not with the optical characteristics of a diffractive optically variable element under analysis, executed by a computer processing unit, and wherein
the steps of conversion from the RGB color model to the HSV (309) color model, of SSIM calculation (402), of CTI calculation (312), of classification (404) and of classification (314) are executed if the variances of the channels a* and b* of the representation in the CIELAB color model of the resized and balanced image of the region to be classified (207) are respectively greater than or equal to a threshold CIELAB value for channel a* (CIELAB threshold a*) and a threshold CIELAB value for channel b* (CIELAB threshold b*); and
the digital image is classified as incompatible with the diffractive optically variable element under study if the variances of channels a* and b* of the representation in the CIELAB color model of the balanced and resized image of the region to be classified (207) are respectively lower than the CIELAB threshold for channel a* (CIELAB threshold a*) and a threshold CIELAB value for channel b* (CIELAB threshold b*).

In the preferred embodiments of the invention, the method of the invention includes an additional step of definition of a machine learning classifier model and a subsequent additional step of classification of a ROI such as a diffractive optically variable element or non-diffractive optically variable element using a machine learning classifier model, whereby both the additional steps are executed by a computer processing unit by means of machine learning method, wherein
the training step of a machine learning classifier model is executed based on the processing of a plurality of training data including structural similitude index pairs (SSIM) and color transitions indexes (CTI), obtained after the execution of step i) of the classification in a training phase; and
the classification step of a digital image as a diffractive optically variable element or a non-diffractive optically variable element by the machine learning classifier model executes the prediction about the existence of a diffractive optically variable element arranged on a surface of an object.

In the even more preferred embodiments of the method of the invention, the structural similitude index pairs (SSIM) and the color transitions indexes (CTI), processed by the classified model during the commonly used process, are continuously added to a training data base, which is used to train more robust classifier models throughout the common use of the system wherein the classification method is implemented.

In the preferred embodiments, the machine learning method is selected from the group consisting in a binary logistic regression, neuronal networks, support-vector machines (in English *support-vector machines*), adaptive boosting (in English *adaptive boosting*), Naive Bayes classifier, decision tree, Random Forest (in English *Random Forest*), deep neural network (in English *deep neural network*) or neural radiance fields (in English *neural radiance fields*). Even more preferably, the machine learning method is a binary logistic regression.

In the preferred embodiments of the method of the invention, the image acquisition device is built into a portable computer apparatus, for example a *smartphone* or a *tablet,* or it is built into a computer apparatus connected to an optical microscope.

In the preferred embodiments of the method of the invention, the time lag between the capture of the second digital image of a security element (103) and the capture of the first digital image of a security element (102) in step a) is less than or equal to 200 milliseconds, preferably less or equal to 50 milliseconds.

In some embodiments, as will be understood by a person skilled in the art, the computer processing unit which executes at least one of the steps of the method of the present invention is located in a computer apparatus connected to the image acquisition device by means of a communication channel. As examples of communication channels, a communication network is cited, which includes at least one network selected from the group consisting of a public network, an interconnected set of public and/or private networks, such as the Internet, and a private network. Additionally, the communication network can be embodied by means of wires or by means of wireless communication means. In this embodiment, the electronic data base which includes the training data of the classifier model is built-in in the computer apparatus connected to the image acquisition device by means of a communication channel or it is built-in into another computer apparatus, which also communicates by network with the computer apparatus connected to the image acquisition device.

Preferably the image acquisition device built-in into the portable computer apparatus executes the captures of the second digital image of a security element (103) and the capture of a first digital image of a security element (102) by means of the activation of a light source for one of said images and by deactivation of the light source for the other image. Even more preferably, the image acquisition device is a *smartphone* or a *tablet* and the light source is a *flash* built-in in the digital camera included in the acquisition device. According to this embodiment, the method according to the present invention can be conducted in an *off-line* mode, using essentially the computer program installed in the *smartphone* apparatus or a *tablet.*

As used in this description, the expressions "about" and "approximately" refer to a range of values plus or minus 10% the specified number.

As used throughout this patent application, the expression "or" is used in the inclusive sense instead of the exclusive sense, unless the exclusive sense is clearly defined in a specific situation. In this context, a sentence of the type "X uses A or B" must be interpreted as including all the pertinent inclusive combinations, for example "X uses A", "X uses B" and "X uses A and B".

As used throughout this patent application, the indefinite article "one" must be interpreted generally as "one or more", unless the sense of a singular embodiment is clearly defined in a specific situation.

As presented in this specification, the expressions listed with examples must be interpreted with the purpose of illustrating an example and not indicating a preference.

As used in this specification, the expression "substantially" means that the real value is within the range of values of about 10% the desired value, variable, or related threshold, particularly within about 5% of the desired value, variable, or related threshold or particularly within about 1% of the desired value, variable, or related threshold.

The subject matter described above is provided as an illustration of the present invention and must not be interpreted so as to limit it. The terminology used with the purpose of describing specific embodiments, according to the present invention, must not be interpreted to limit the invention. As used in the specification, the definite and indefinite articles, in their singular form, aim at the interpretation of also including the plural forms, unless the context of the description indicates, explicitly, the contrary. It will be understood that the expressions "comprise" and "include", when used in this description, specify the presence of the characteristics, the elements, the components, the steps, and the related operations, however, they do not exclude the possibility of other characteristics, elements, components, steps, and operations also being contemplated.

All the alterations, providing that they do not modify the essential characteristics of the claims that follow, must be considered as being within the scope of protection of the present invention.

### LIST OF REFERENCE INDICATIONS

100. A step of image capture in a first lighting condition;
101. A step of image capture in a second lighting condition;
102. A first digital image;
103. A second digital image;
104. A step of detecting the position of reference fiducial markers existing in the first digital image;
105. A step of detecting the position of reference fiducial markers existing in the second digital image;
106. Coordinates of the reference fiducial markers of the first digital image;
107. Coordinates of the reference fiducial markers of the second digital image;
108. A calculation step of the coordinates of the two regions of optical interest of the first digital image; region of optical interest and reference region of optical interest;
109. A calculation step of the coordinates of the two regions of optical interest of the second digital image; region of optical interest and reference region of optical interest;
110. Coordinates of the two regions of optical interest of the first digital image;
111. Coordinates of the two regions of optical interest of the second digital image;
112. Cutout of at least one region of optical interest of the first digital image;
113. Cutout of at least one region of optical interest of the second digital image;
114. A region of optical interest cut out from the first digital image of a security element;
115. A region of optical interest cut out from the second digital image of a security element;
116. A reference region of optical interest cut out from the first digital image;
117. A reference region of optical interest cut out from the second digital image;
200: A resizing step of the image of the region of optical interest to be classified. In this step the image obtained with the light controlled by the acquisition device connected is considered (see 100-117);
201: A resized region of optical interest of the digital image of a security element;
202: A white balance step of the image of the region to be classified;
203: A balanced region of optical interest of the digital image of a security element;
204: A conversion step from RGB color model to CIELAB color model of the image of the resized and balanced region to be classified;
205. Balanced image in CIELAB space of the resized and balanced image of the region to be classified;
206. Calculation step of the variance of channel a* and b* of the image in CIELAB space of the resized and balanced image of the region to be classified;
207. A variance of channel a* and a variance of channel b* of the image in CIELAB space of the resized region of optical interest of a security element obtained with controlled light by the connected acquisition device;
208. A decision step. If the variance of channel a* and the variance of channel b* of the image in CIELAB space of the resized region of optical interest of the digital image of a security element obtained with the controlled light of the connected acquisition device are greater than a threshold value, the decision step returns the "true" result otherwise it returns the "false" result;
209. False Boolean value of the decision process 209;
210. Classification step. The region of optical interest is classified as not being a diffractive optically variable element;
211. "True" Boolean value of the decision process 209;
212. Classification step. The nature of the region of optical interest is considered compatible with a diffractive optically variable element and the analysis process continues;
300. A resizing step of the image of the region of optical interest cut out from the digital image of a security element. This image was obtained in a first lighting condition;
301. A resizing step of the image of the region of optical interest cut out from the digital image of a security element. This image was obtained in a second lighting condition;
302. Resized region of optical interest of the first digital image of a security element obtained in a first lighting condition;
303. Resized region of optical interest of the second digital image of a security element obtained in a second lighting condition;
304. A white balance step of the image obtained of the resized region of optical interest of the digital image of a security element obtained in a first lighting condition;
305. A white balance step of the image obtained of the resized region of optical interest of the digital image of a security element obtained in a second lighting condition;
306. A balanced region of optical interest of the first digital image of a security element;
307. A balanced region of optical interest of the second digital image of a security element;
308. A conversion step from the RGB color model to the HSV color model of the region of optical balanced interest of the first digital image of a security element captured in a first lighting condition;
309. A conversion step from the RGB color model to the HSV color model of the balanced region of optical interest of the second digital image of a security element captured in a second lighting condition;
310. A region of optical interest of the first digital image of a security element in the HSV color model;
311. A region of optical interest of the second digital image of a security element in the HSV color model;
312. Calculation step of the value of the color transition index (CTI);
313. A value of the color transitions index;
314. A classification step of the region of optical interest. If the CTI value is greater than or equal to the threshold value, the region of optical interest is classified as a diffractive optically variable element. If the CTI value is less than the threshold value, the region of optical interest is classified as a non-diffractive optically variable element;
400. A balance step of the histogram of channel V of the region of optical interest of the first digital image of a security element in the HSV color model (310). The balance of the histogram is made relative to the channel V of the region of optical interest of the second digital image of a security element in the HSV color model (311) obtained in a second lighting condition;
401. Channel V of a balanced image of the resized region of optical interest of the digital image of a security element obtained in a first lighting condition, converted to the HSV color model wherein channel V was balanced according to the histogram of the region of optical interest of the second digital image of a security element in the HSV color model (311).
402. Calculation step of the value of the structural similitude index (SSIM);
403. A structural similitude index value;
404. A classification step of the region of optical interest. If the value of the SSIM is greater than or equal to the threshold value, the region of optical interest is classified as not being a diffractive optically variable element. If the CTI value is less than the threshold value, the region of optical interest is classified as a diffractive optically variable element.
500. Calculation step of the value of color transitions index (CTI) according to steps 300 to 314;
501. Calculation step of the structural similitude index value (SSIM) according to steps 300 to 311 and 400 to 404;
502. A value of the color transitions index (CTI);
503. A structural similitude index value (SSIM);
504: Training, test and validation step of a classifier model;
505: Classifier model of the nature of the region of optical interest;
506: Registration step of the model of a nature classifier of the region of optical interest;
600. Calculation step of the value of color transitions index (CTI) according to steps 300 to 314;
601. Calculation step of the structural similitude index value (SSIM) according to steps 300 to 311 and 400 to 404;
602. A value of the color transitions index (CTI);
603. A structural similitude index value (SSIM);
604. A classification step using the classification model created according to the steps 500 to 504.
605: Representative value of the nature of the region of optical interest.
606: Step of prediction of the nature of the region of optical interest according to the representative value of the nature of the region of optical interest obtained in step 605.
QR. A QR code.
DOVID. A diffractive optically variable element.
LOG. A logotype or mark.

### LIST OF CITATIONS

European patent application EP3910548 A1, Konstantinov et al., published on November 17, 2021;
North American patent application US 2014/0055824 A1, Tremolada et al., published on February 27, 2014;

## Claims

1. A computer implemented method for verifying the existence of a diffractive optically variable element (DOVID) arranged on the surface of an object by means of processing of images captured of a security element by an image acquisition device **characterized by** comprising the following steps:
a) Capture, executed by the image acquisition device, for example a digital camera with built-in *flash,* of at least two images including a region of optical interest arranged in the security element, wherein
a first digital image of a security element (102) is captured under a first lighting condition (100); and
a second digital image of a security element (103) is captured under a second lighting condition (101), wherein the capture of the second digital image of the security element (103) is temporally out of phase relative to the capture of the first digital image of a security element (102);
b) Cutout of a region of optical interest of the first digital image (112), executed by a computer processing unit, obtaining a region of optical interest cut out from the first digital image of a security element (114); and cutout of a region of optical interest of the second digital image (113), obtaining a region of optical interest cut out from the second digital image of a security element (115);
c) Obtaining, carried out by a computer processing unit, a first reference white for the region of optical interest cut out from the first digital image of a security element and a second reference white for the region of optical interest cut out from the second digital image of a security element;
d) Resizing the region of optical interest of the first image (300) and resizing the region of optical interest (301) of the second image, executed by a computer processing unit, respectively of the region of optical interest cut out from the first digital image of a security element (114) and of the region of optical interest cut out from the second digital image of a security element (115), obtaining a resized region of optical interest of the first digital image of a security element (302) and a second resized region of optical interest of the second digital image of a security element (303);
e) Conversion, executed by a computer processing unit, from the RGB color model to the HSV color model of the resized region of optical interest of the first digital image of a security element (302); and conversion, executed by a computer processing unit, from the RGB color model to the HSV color model of the second resized region of optical interest of the second digital image of a security element (303), obtaining, respectively a region of optical interest of the first digital image of a security element in the HSV color model (310) and a region of optical interest of the second digital image of a security element in the HSV color model (311);
f) Balance (400) of the histogram of channel V of the region of optical interest of the first digital image of a security element in color model HSV (310) relative to the histogram of channel V of the region of optical interest of the second digital image of a security element in HSV color model (311), obtaining a channel V of a balanced image of the resized region of optical interest of the digital image of a security element obtained in a first lighting condition (401);
g) Calculation (402) of a structural similitude index (SSIM), executed by a computer processing unit, based on channel V of a balanced image of the resized region of optical interest of the digital image of a security element obtained in a first lighting condition (401) and on channel V of the region of optical interest of the second digital image of a security element in HSV color model (311);
h) First classification (404) of a digital image as a diffractive optically variable element or non-diffractive optically variable element, executed by a computer processing unit, based on the relation between the value of the structural similitude index (SSIM) calculated in step g) and a reference threshold value.

2. A computer implemented method for verifying the existence of a diffractive optically variable element (DOVID) arranged on the surface of an object by means of processing of images captured of a security element by an image acquisition device **characterized by** comprising the following steps:
a) Capture, executed by the image acquisition device, for example a digital camera with built-in *flash,* of at least two images including a region of optical interest arranged in the security element, wherein
a first digital image of the security element (102) is captured under a first lighting condition (100); and
a second digital image of a security element (103) is captured under a second lighting condition (101), wherein the capture of the second digital image of the security element (103) is temporally out of phase relative to the capture of the first digital image of a security element (102);
b) Cutout of the two regions of optical interest of the first digital image (112), executed by a computer processing unit, obtaining a region of optical interest cutout of the first digital image (114) and a reference region of optical interest cut out from the first digital image (116); and cutout of the two regions of optical interest of the second digital image (113), obtaining a region of optical interest cutout of the second digital image of a security element (115) and a reference region of optical interest cutout of the second digital image (117);
c) Obtaining, carried out by a computer processing unit, a reference white for the region of optical interest cut out from the first digital image of a security element and a reference white for the region of optical interest cut out from the second digital image of a security element;
d) Resizing the region of optical interest of the first image (300) and resizing the region of optical interest (301) of the second image, executed by a computer processing unit, respectively of the region of optical interest cut out from the first digital image of a security element (114) and of the region of optical interest cut out from the second digital image of a security element (115), obtaining a resized region of optical interest of the first digital image of a security element (302) and a second resized region of optical interest of the second digital image of a security element (303);
e) White balance of the image of the resized region of optical interest of the digital image of a security element obtained in a first lighting condition (304), executed by a computer processing unit, of the resized region of optical interest, of the first security element (302) relative to the first reference white for the first region of optical interest cutout of the first digital image of a security element, and white balance of the image of the resized region of optical interest of the digital image of the security element obtained in a second lighting condition (305), executed by a computer processing unit of the second resized region of optical interest of the second digital image of a security element (303), relative to the second reference white for the second region of optical interest cut out from the first digital image of a security element, obtaining respectively a balanced region of optical interest of the first digital image of a security element (306) and a balanced region of optical interest of the second digital image of a security element (307);
f) Conversion (308), executed by a computer processing unit, from the RGB color model to the HSV color model of the balanced region of optical interest of the first digital image of a security element (306) and conversion (309), executed by a computer processing unit from the RGB color model to the HSV color model of the balanced region of optical interest of the second digital image of a security element (307), obtaining, respectively a region of optical interest of the first digital image of a security element in the HSV color model (310) and a region of optical interest of the second digital image of a security element in the HSV color model (311);
g) Calculation (312) of a color transitions index (CTI), executed by a computer processing unit, based on the count of the color transitions of channel H of the HSV color model for the two digital images obtained in step f), relative to a reference threshold value (CTI threshold);
h) Second classification (314) of a digital image as a diffractive optically variable element or non-diffractive optically variable element, executed by a computer processing unit, based on the relation between the value of the color transitions index (CTI) calculated in step g) and a reference threshold value.

3. A computer implemented method for verifying the compatibility of the optical characteristics of a certain region of interest with those of a diffractive optically variable element (DOVID) arranged on the surface of an object by means of processing of an image captured of a security element by an image acquisition device **characterized by** comprising the following steps:
a) Capture, executed by the image acquisition device, for example a digital camera with built-in *flash,* of at least one image including a region of optical interest arranged on the security element, wherein
a first digital image of the security element (102) is captured under a first lighting condition (100), controlled by the image acquisition device, for example, with the help of the built-in *flash*;
b) Cutout of a region of optical interest of the first digital image (112), executed by a computer processing unit, obtaining a region of optical interest cut out from the digital image of a security element (114) and a reference region of optical interest cut out from the digital image (116);
c) Obtaining, carried out by a computer processing unit, a reference white for the region of optical interest cut out from the digital image of a security element;
d) Resizing the image of the region of optical interest to be classified (200), executed by a computer processing unit, of the region of optical interest cut out from the first digital image of a security element (114), obtaining a resized region of optical interest of the digital image of a security element (302);
e) White balance of the image of the region to be classified (202), executed by a computer processing unit, of the resized region of optical interest of the digital image of a security element (201), relative to the reference white for the region of optical interest cut out from the digital image of a security element, obtaining a balanced region of optical interest of the digital image of a security element (203);
f) Conversion (204), executed by a computer processing unit, from the RGB color model to the CIELAB color model of the balanced region of optical interest of the digital image of a security element (203), obtaining a balanced image in the CIELAB space of the image of the balanced and resized region to be classified (205);
g) Calculation (206), executed by a computer processing unit, of the variances of channels a* and b* of the representation in the CIELAB color model of the balanced image in the CIELAB space of the image of the resized and balanced region to be classified (205);
h) Decision (208) and classification (210) of a digital image as compatible or not with the optical characteristics of a diffractive optically variable element executed by a computer processing unit, wherein the digital image is classified as incompatible with the diffractive optically variable element under study, if the variances (207) of the channels a* and b* of the representation in the CIELAB color model of the balanced image in the CIELAB space of the resized and balanced image of the region to be classified (205) are respectively less than a threshold CIELAB value for the channel a* (CIELAB threshold a*) and a threshold CIELAB value for channel b* (CIELAB threshold b*).

4. A computer implemented method for verifying the existence of a diffractive optically variable element (DOVID) arranged on the surface of an object by means of processing of images captured of a security element by an image acquisition device **characterized by** comprising the following steps:
a) Capture, executed by the image acquisition device, for example a digital camera with built-in *flash,* of at least two images including a region of optical interest arranged in the security element, wherein
a first digital image of the security element (102) is captured under a first lighting condition (100); and
a second digital image of a security element (103) is captured under a second lighting condition (101), wherein the capture of the second digital image of the security element (103) is temporally out of phase relative to the capture of the first digital image of a security element (102);
b) Cutout of the two regions of optical interest of the first digital image (112), executed by a computer processing unit, obtaining a region of optical interest cutout of the first digital image (114) and a reference region of optical interest cut out from the first digital image (116); and cutout of the two regions of optical interest of the second digital image (113), obtaining a region of optical interest cutout of the second digital image of a security element (115) and a reference region of optical interest cutout of the second digital image (117);
c) Obtaining, carried out by a computer processing unit, a reference white for the region of optical interest cut out from the first digital image of a security element and a reference white for the region of optical interest cut out from the second digital image of a security element;
d) Resizing the region of optical interest of the first image (300) and resizing the region of optical interest (301) of the second image, executed by a computer processing unit, respectively of the region of optical interest cut out from the first digital image of a security element (114) and of the region of optical interest cut out from the second digital image of a security element (115), obtaining a resized region of optical interest of the first digital image of a security element (302) and a second resized region of optical interest of the second digital image of a security element (303);
e) White balance of the image of the resized region of optical interest of the digital image of a security element obtained in a first lighting condition (304), executed by a computer processing unit, of the resized region of optical interest, of the first digital image of a security element (302) relative to the reference white of the first region of optical interest cut out from the first digital image of a security element, and white balance of the image of the resized region of optical interest of the digital image of the security element obtained in a second lighting condition (305), executed by a computer processing unit of the second resized region of optical interest of the second digital image of a security element (303), relative to the reference white for the second region of optical interest cut out from the first digital image of a security element, obtaining respectively a balanced region of optical interest of a first digital image of a security element (306) and a balanced region of optical interest of the second digital image of a security element (307);
f) Conversion (308), executed by a computer processing unit, from the RGB color model to the HSV color model of the balanced region of optical interest of the first digital image of a security element (306) and conversion (309), executed by a computer processing unit from the RGB color model to the HSV color model of the balanced region of optical interest of the second digital image of a security element (307), obtaining, respectively a region of optical interest of the first digital image of a security element in the HSV color model (310) and a region of optical interest of the second digital image of a security element in the HSV color model (311);
g) Balance (400) of the histogram of channel V of the region of optical interest of the first digital image of a security element in color model HSV (310) relative to the histogram of channel V of the region of optical interest of the second digital image of a security element in HSV color model (311), obtaining a channel V of a balanced image of the resized region of optical interest of the digital image of a security element obtained in a first lighting condition (401);
h) Calculation (402) of a structural similitude index (SSIM), executed by a computer processing unit, based on channel V of a balanced image of the resized region of optical interest of the digital image of a security element obtained in a first lighting condition (401) and on channel V of the region of optical interest of the second digital image of a security element in HSV color model (311);
i) Calculation (312) of a color transitions index (CTI), executed by a computer processing unit, based on the count of the color transitions of channel H of the HSV color model for the two digital images obtained in step f), relative to a reference threshold value (CTI threshold);
j) Classification (404) and classification (314) of a digital image as a diffractive optically variable element or a non-diffractive optically variable element, respectively executed by a computer processing unit, based on values of the structural similitude index (SSIM), calculated in step h) and on the color transitions index (CTI), calculated in step i); wherein the order of the steps h) and i) can be exchanged.

5. The computer implemented method for verifying the existence of a diffractive optically variable element arranged on the surface of an object, according to any of the preceding claims, **characterized by** including an additional step of detecting a reference zone for the establishment of a coordinates system in each of the first digital image of the security element (102) and the second digital image of a security element (103), which allows the definition of the geometry of the region of optical interest in each one of said images, whereby this additional step is executed between said steps a) and b) by a computer processing unit, wherein
the reference zone comprises at least one marker selected from the group consisting of a one-dimensional digital marker, and a two-dimensional digital marker.

6. The computer implemented method for verifying the existence of a diffractive optically variable element arranged on the surface of an object, according to any of claims 2 and 4 to 5, **characterized by** before step e) relative to the white balance or before step d) relative to the resizing there being executed the calculation of the reference white, by a computer processing unit, respectively, for the resized region of optical interest of the first digital image of a security element obtained in a first lighting condition (302) and resized region of optical interest obtained in a second lighting condition (303) or for the region of optical interest cut out from the first digital image of a security element (114) and for the region of optical interest cut out from the second digital image of a security element (115).

7. The computer implemented method for verifying the existence of a diffractive optically variable element arranged on a surface of an object, according to any of claims 4 to 6, **characterized by** the color model of the balanced region of optical interest of a digital image of a security element (203) being converted, by a computer processing unit, from RGB to CIELAB, obtaining a balanced image in the CIELAB space of the resized and balanced image of the region to be classified (205); and there being carried out a calculation step (206), by a computer processing unit, of the variances of channels a* and b* of the representation in the CIELAB color model of the resized and balanced image of the region to be classified (205); and being carried out a decision step (208) and classification (210) of the digital image as being compatible or not with the optical characteristics of a diffractive optically variable element under analysis, executed by a computer processing unit, and wherein
the steps of conversion from the RGB color model to the HSV (309) color model, of SSIM calculation (402), of CTI calculation (312), of classification (404) and of classification (314) are executed if the variances of the channels a* and b* of the representation in the CIELAB color model of the resized and balanced image of the region to be classified (207) are respectively greater than or equal to a threshold CIELAB value for channel a* (CIELAB threshold a*) and a threshold CIELAB value for channel b* (CIELAB threshold b*); and
the digital image is classified as incompatible with the diffractive optically variable element under study if the variances of channels a* and b* of the representation in the CIELAB color model of the balanced and resized image of the region to be classified (207) are respectively lower than the CIELAB threshold for channel a* (CIELAB threshold a*) and a threshold CIELAB value for channel b* (CIELAB threshold b*).

8. The computer implemented method for verifying the existence of a diffractive optically variable element (DOVID) arranged on the surface of an object according to any of claims 4 to 7, **characterized by** including an additional step of definition of a machine learning classifier model and a subsequent additional step of classification of a digital image as a diffractive optically variable element or a non-diffractive optically variable element using a machine learning classifier model, wherein both additional steps are executed by a computer processing unit by means of a machine learning method, wherein
the training step of a machine learning classifier model is executed based on the processing of a plurality of training data including structural similitude index pairs (SSIM) and color transitions indexes (CTI), obtained after the execution of step i) of the classification in a training phase; and
the classification step of a region of optical interest (ROI) as a diffractive optically variable element or a non-diffractive optically variable element by the machine learning classifier model carries out the prediction about the existence of a diffractive optically variable element arranged on the surface of an object.

9. The computer implemented method for verifying the existence of a diffractive optically variable element arranged on the surface of an object, according to the preceding claim **characterized by** the structural similitude index pairs (SSIM) and the color transitions indexes (CTI), processed by classifier model, being added to a training data base.

10. The computer implemented method for verifying the existence of a diffractive optically variable element arranged on the surface of an object according to any of claims 8 to 9, **characterized by** the machine learning method being selected from the group consisting of a binary logistic regression, neuronal networks, support-vector machine, adaptive boosting, Naïve Bayes classifier, decision tree, Random Forest, deep neural network, or neural radiance fields.

11. The computer implemented method for verifying the existence of a diffractive optically variable element (DOVID) arranged on the surface of an object, according to any of the preceding claims, **characterized by** the image acquisition device being built into a portable computer apparatus, for example, a *smartphone* or a *tablet,* or being built into a computer apparatus connected to a microscope or optical telescope.

12. The computer implemented method for verifying the existence of a diffractive optically variable element (DOVID) arranged on the surface of an object, according to any of the preceding claims, **characterized by** the time lag between the capture of the second digital image of a security element (103) and the capture of the first digital image of a security element (102) in step a) being less or equal to 200 milliseconds, preferably less or equal to 50 milliseconds.

13. The computer implemented method for verifying the existence of a diffractive optically variable element (DOVID) arranged on the surface of an object, according to any of claims 11 to 12, **characterized by** the image acquisition device built into the portable computer apparatus executing the captures of the second digital image of a security element (103) and the capture of a first digital image of a security element (102) by means of the activation of a light source for one of said images and by deactivating the light source for the other image.

14. A computer program, **characterized by** comprising instructions which, when the computer program is executed by a computer apparatus, cause the computer apparatus to execute the steps of the method defined in any of the preceding claims.

15. Reading means by a computer apparatus, **characterized by** having the computer program, as defined in the preceding claim, stored.
